# Europäisches Patentamt
## European Patent Office
## Office européen des brevets

(19)

(11) Publication number: **0 014 056**
**B1**

(12) **EUROPEAN PATENT SPECIFICATION**

(45) Date of publication of patent specification: **25.05.83**

(51) Int. Cl.³: **B 05 B 3/10, B 01 D 1/20**

(21) Application number: **80300112.2**

(22) Date of filing: **11.01.80**

(54) **An atomizer wheel for the atomization of liquids.**

(30) Priority: **19.01.79 DK 252/79**

(43) Date of publication of application:
**06.08.80 Bulletin 80/16**

(45) Publication of the grant of the patent:
**25.05.83 Bulletin 83/21**

(84) Designated Contracting States:
**CH DE FR GB IT NL SE**

(56) References cited:
**GB - A - 712 823**
**GB - A - 1 276 000**
**GB - A - 1 439 540**
**US - A - 3 454 226**

(73) Proprietor: **A/S NIRO ATOMIZER**
**No. 305 Gladsaxevej**
**DK-2860 Soeborg (DK)**

(72) Inventor: **Hansen, Ove Emil**
**No. 261 Skovgards Alle**
**DK-3500 Vaerlose (DK)**

(74) Representative: **Westwood, Edgar Bruce et al,**
**STEVENS, HEWLETT & PERKINS 5, Quality Court**
**Chancery Lane**
**London WC2A 1HZ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## An atomizer wheel for the atomization of liquids

The invention relates to an atomizer wheel for the atomization of liquids, comprising a hub for securing the wheel to a drive shaft rotating with a prescribed direction of rotation, a wheel bottom connected with said hub and a cylindrical side wall connected with said wheel bottom and forming together with the wheel bottom and the hub a bowl-shaped liquid supply chamber, a wheel cover secured to the side wall and having an opening for communication with an inlet for liquid to be atomized, at least one row of ejection orifices for atomized liquid being formed in said wall.

Atomizer wheels of the above kind are disclosed in, GB—A—1276000 and US—A—3454226 the ejection orifices being provided with wear resistant bushings projecting somewhat into the interior of the wheel to protect the ejection nozzles against the harmful influences of highly abrasive materials.

In the use of atomizer wheels of the above kind in the atomization of liquid that forms part of a spray drying process for powder production, the problem occurs with some materials that quite considerable amounts of air may be whipped into the liquid, that is influenced by rotational and centrifugal forces in the atomizer wheel, as a result of which a great content of air in the form of occluded air in the powder particles will also appear in the finished powder product. Thereby, the product will attain a low bulk density giving rise to a high consumption of packing material and relatively great demands for transport and storage space. Moreover, the voluminous structure of such a powder product results in a particular liability to detrimental environmental influences, particularly in the form of oxidation and absorption of humidity, in addition to which the occluded air may in itself give rise to harmful oxidation.

In the past, various measures have been suggested for reduction of occlusion of air in the liquid in the atomizer wheel. Thus, in GB—A—No. 712,823 and DK—A—No. 76,954, a particular centrifugation prior to the atomization is prescribed, which requires a complicated construction of the atomizer wheel, and in order to avoid air occlusion it is known from GB—A—No. 1,439,540 to impart a temperature to the liquid supplied to the atomizer wheel, at which a strong degasification, possibly boiling, takes place inside the atomizer wheel itself.

It is the object of the present invention to avoid or reduce the occlusion or whipping-in of air into the atomized liquid without using such particular measures which either require a complicated and expensive atomizer wheel design or an increased energy consumption.

To accomplish this, the atomizer wheel according to the invention is characterized in that a protrusion is formed at the inner side of the side wall of the wheel around the leading edge of each ejection orifice relative to the direction of rotation for guiding a liquid layer flowing backwards relative to the side wall around said leading edge and along the surface of the side wall between the ejection orifice and said wheel bottom or wheel cover to a liquid inlet passage of the ejection orifice facing other than forwards relative to the direction of rotation.

The invention is based on the recognition of the fact that the stream of liquid flowing through an ejection orifice or channel under the influence of the rotational and centrifugal forces in the form of a liquid layer flowing along the radial wall of the channel lying backwards relative to the direction of rotation is subjected to said whipping-in of air by impact of liquid droplets generated by atomization of part of the liquid flowing over the internal edge of the opposite radial wall lying foremost relative to the direction of rotation. This undesired atomization takes place at the inlet end of the ejection orifice or channel as a result of the fact that the liquid supplied to the bowl-shaped chamber of the wheel in this place rotates more slowly than the wheel itself, so that a liquid layer flowing rearwardly relative to the movement of the side wall is formed.

By means of the design suggested according to the invention, it is avoided that the liquid is atomized at the leading edge relative to the direction of rotation at the inlet to the ejection orifice. Instead, substantially all the liquid will be guided through said inlet passage to the ejection orifice in a flow which is not atomized until at the outlet edges of the ejection orifice on the external side of the atomizer wheel.

Experiments have shown that by means of an atomizer wheel according to the invention, a significantly increased powder bulk density may be obtained by atomization of liquids of the kind which will otherwise have a tendency to yield a voluminous powder product with a too low specific gravity, a considerable improvement being obtained already by means of a liquid inlet passage, the leading walls of which are normal to the direction of rotation.

In an embodiment of the atomizer wheel according to the invention, the protrusion around the leading edge of each ejection orifice is formed by a bushing inserted in the orifice and projecting inwardly from the inner side of the side wall, said inlet passage being formed as a slit at the rear side of the bushing relative to the direction of rotation, the central plane of said slit lying within an angular range of $\pm 90°$ around the direction opposite to said direction of rotation. Preferably, the bottom of the slit coincides substantially with the inner side of the side wall.

In the following, the invention will be explained in further detail with reference to the accompaning schematical drawings, in which

Figure 1 is a sectional view of an embodiment of an atomizer wheel according to the invention along an axial plane,

Figure 2 is a partial radial sectional view along the line II—II in Figure 1, and

Figure 3 shows a part of the side wall of the atomizer wheel around an ejection orifice seen from the interior of the wheel.

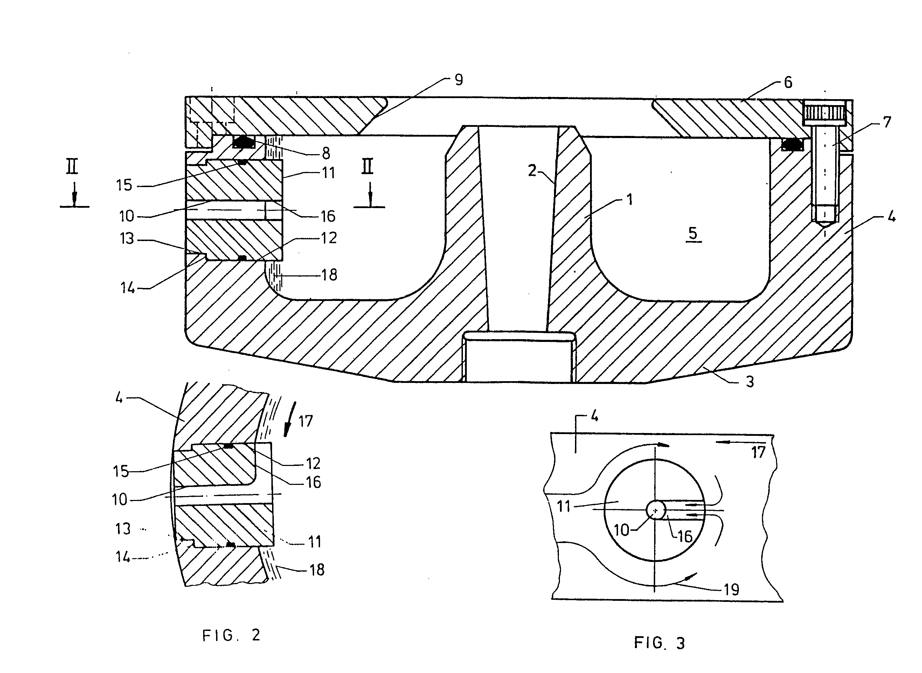

In the schematical drawings, Figure 1 is an axial sectional view of an atomizer wheel having a hub 1, which for arrangement on a rotating drive shaft, not shown, is formed with an axial bore 2, together with a wheel bottom 3 and a cylindrical side wall 4. In the embodiment shown, the hub 1, the wheel bottom 3 and the side wall 4 are formed in one piece, but they may also consist of separate parts firmly connected with each other. The three parts define together a bowl-shaped liquid supply chamber 5 limited upwardly by a wheel cover 6 which is secured to the side wall 4 by means of bolts 7 and a sealing ring 8, and in which a central opening 9 is intended for connection to a non-illustrated inlet, such as a funnel-shaped inlet, for liquid to be atomized.

In the side wall 4, at least one row of ejection orifices is formed, of which only one is shown in the drawings. In the example shown, each ejection orifice is formed by a relatively narrow channel 10 in a bushing 11 inserted in a bore 12 in the side wall 4.

As shown in Figures 1 and 2, the side wall 4 is formed at its external side around the bore 12 with a collar 13 as abutment for a shoulder part 14 of the bushing 11, and between the bushing 11 and the bore 12 an O-ring 15 is inserted for sealing.

As further illustrated, the bushing 11 projects a distance inwardly of the inner side of the side wall 4 and is formed in the end facing the interior of the atomizer wheel with a slit 16 leading from the channel 10 to the circumference of the bushing.

In the embodiment shown, the slit is linear and directed opposite to the direction of rotation. However, as apparent from the following examples, a considerable effect will be obtained when the central plane of the slit is lying simply within an angular range of ± 90° around the direction opposite to the direction of rotation. Similarly, the slit need not necessarily have a width corresponding to the diameter of the ejection channel 10 throughout its length, but may also be formed as a circular sector having a width increasing towards the circumference of the bushing, so as to form a wedge-shaped inlet passage.

The purpose of the slit 16 is to form a liquid inlet passage to the ejection channel 10 and, as shown in the drawing, the bushing 11 is arranged in the bore 12 in such a way that this inlet passage formed by the slit 16 extends rearwardly from the channel 10 relatively to the direction of rotation of the atomizer wheel shown by an arrow 17.

Thereby, the liquid layer 18 indicated symbolically in Figures 1 and 2, which during rotation of the atomizer wheel is built up at the side wall 4 and is not accelerated to rotation at quite the same tangential velocity as the side wall 4, so that it flows rearwardly relative thereto, will be forced by the leading edge of the end of the bushing 11 projecting inwardly from the side wall relative to the direction of rotation around the ejection channel 10, as shown by arrows 19 in Figure 3, to the rear side of the bushing 11, at which the slit 16 is formed with a depth such that the bottom thereof coincides substantially with the inner side of the side wall 4.

Thereby, the undesired atomization at the leading edge of the ejection orifice at the inner side of the side wall mentioned in the foregoing and the occlusion of air in the liquid caused by this atomization is avoided, whereby the amount of air in the atomized product will be considerably reduced.

Since the invention is not in the first place directed to the atomization of suspension of heavily abrasive products, but primarily to the atomization of solutions, particularly great requirements to wearing strength should not be fulfilled by the bushing 11. It may be manufactured, for example, from stainless steel.

The invention is not limited to the embodiments shown in the drawings, in which the ejection orifices are formed by channels in separate bushings inserted into bores in the side wall of the wheel. To achieve the flow of liquid to the ejection orifice through an inlet passage at the rear side of the orifice characteristic for the invention, it is only required that a protrusion is provided at the inner side of the side wall around the leading edge of each ejection orifice relative to the direction of rotation for guiding the rearwardly flowing liquid layer around the leading edge of the ejection orifice to a liquid inlet passage at the rear edge of the ejection orifice relative to the direction of rotation.

In principle, such a protrusion may be constituted, for example, by a collar projecting from the inner side of the side wall, but the embodiment shown having a separate bushing inserted into a bore in the side wall will normally be preferred in practice, since it is simple and inexpensive in manufacture.

Example 1

In a drying chamber having a diameter of 2.2 m, experiments were conducted with spray drying of a chrome tanning solution.

The drying air was introduced in the upper part of the drying chamber at a temperature of 270°C. The outlet temperature was 100°C. The solution was supplied to an atomizer wheel of the same design as shown in Figure 1. The diameter of the wheel was 120 mms, and the diameter of the ejection channels of the bushings was 4 mms. The depth of the slit was equal to the distance, by which the bushing projected inwardly of the inner side wall, i.e. 4 mms. The rotational velocity of the wheel was 24,000 r.p.m.

The bulk density of the powder produced by the drying was measured in the normal way by tapping 100 times and was .89 g. per ml.

A similar experiment was conducted with a conventional atomizer wheel having the same diameter, but comprising radial ejection channels. All other operational conditions were unchanged. Thereby, a powder was obtained having a bulky density measured in the same way of .74 g. per ml.

## Example 2

Experiments were conducted with spray drying of a solution of a reactive dye.

The diameter of the drying chamber was 2.7 m. The drying air was introduced in the upper part of the drying chamber at a temperature of 230°C. The outlet temperature was 125°C. The solution was supplied to an atomizer wheel according to the invention of the same design as in Example 1. The rotational velocity of the wheel was 13,000 r.p.m.

Thereby, a bulk density of the produced powder of .68 g. per ml. was obtained.

Control experiments under the same conditions, but with a conventional atomizer wheel resulted in a bulk density of .54 g. per ml.

## Example 3

Four experiments were conducted with spray-drying of sulphite waste liquor.

The diameter of the drying chamber was 2.2 m. The drying air was introduced in the upper part of the drying chamber at a temperature of 230°C. The outlet temperature was 100°C. The solution was supplied to an atomizer wheel according to the invention of the same design as in Example 1. The rotational velocity of the wheel was 19,000 r.p.m.

In a first experiment (A), the slit in the bushing was directed rearwardly relative to the rotational direction of the atomizer wheel, such as shown in Figure 1. In a second experiment (B), the bushings had been turned through 90°, so that the slit was directed upwardly. In a third experiment (C), the bushings had been turned through 90° the opposite way, so that the slit was directed downwardly. In a fourth experiment (D), the bushings had been turned through 180°, so that the slit was directed forwardly relative to the direction of rotation.

In each experiment, the bulk density obtained was measured. The results were as follows:

| Experiment | Slit | Bulk density |
|---|---|---|
| A | rearwardly | 0.52 g. per ml. |
| B | upwardly | 0.47 g. per ml. |
| C | downwardly | 0.48 g. per ml. |
| D | forwardly | 0.39 g. per ml. |

## Claims

1. An atomizer wheel for the atomization of liquids, comprising a hub (1) for securing the wheel to a drive shaft rotating with a prescribed direction of rotation, a wheel bottom (3) connected with said hub and a cylindrical side wall (4) connected with said wheel bottom and forming together with the wheel bottom and the hub a bowl-shaped liquid supply chamber, a wheel cover (6) secured to the side wall and having an opening (9) for communication with an inlet for liquid to be atomized, at least one row of ejection orifices for atomized liquid being formed in said wall (4), characterized in that a protrusion is formed at the inner side of the side wall (4) of the wheel around the leading edge of each ejection orifice relative to the direction of rotation for guiding a liquid layer flowing backwards relative to the side wall around said leading edge and along the surface of the side wall (4) between the ejection orifice and said wheel bottom (3) or wheel cover (6) to a liquid inlet passage of the ejection orifice facing other than forwards relative to the direction of rotation.

2. An atomizer wheel as claimed in claim 1, characterized in that the protrusion around the leading edge of each ejection orifice is formed by a bushing (11) inserted in the orifice and projecting inwardly from the inner side of the side wall (4), said inlet passage being formed as a slit (16) at the rear side of the bushing relative to the direction of rotation, the central plane of said slit lying within an angular range of ± 90° around the direction opposite to said direction of rotation.

3. An atomizer wheel as claimed in claim 2, characterized in that the bottom of said slit (16) coincides substantially with the inner side of the side wall.

## Patentansprüche

1. Zerstäuberrad zum Zerstäuben von Flüssigkeiten mit einer Nabe (1) zur Befestigung des Rades auf einer in einer vorgeschriebenen Drehrichtung rotierenden Antriebswelle, mit einem mit der Nabe verbundenen Radboden (3) und einer zylindrischen Seitenwand (4), die mit dem Radboden verbunden ist und mit diesem und der Nabe eine schalenförmige Flüssigkeits-Zuführungskammer bildet, mit einem Raddeckel (6), der an der Seitenwand befestigt ist und eine Öffnung (9) aufweist zur Verbindung mit einem Eingang für zu zerstäubende Flüssigkeit, wobei in der Wand (4) mindestens eine Reihe von Ejektoröffnungen für zerstäubte Flüssigkeit vorgesehen ist, dadurch gekennzeichnet, dass an der Innenseite der Seitenwand (4) des Rades ein Vorsprung um die in Drehrichtung vordere Kante einer jeden Ejektoröffnung herum vorgesehen ist, um eine entlang der Seitenwand rückwärtsströmende Flüssigkeitsschicht um die erwähnte vordere Kante herum und entlang der Seitenwandfläche (4) zwischen der Ejektoröffnung und dem Radboden (3) bzw. dem Raddeckel (6) zu einem Flüssigkeitseinlass der Ejektoröffnung zu lenken, welcher Einlass anders als vorwärts gegenüber der Drehrichtung gekehrt ist.

2. Zerstäuberrad nach Anspruch 1, dadurch gekennzeichnet, dass der Vorsprung um die vordere Kante jeder Ejektoröffnung von einer Buchse (11) dargestellt ist, die in die Öffnung eingesetzt ist und von der Innenseite der Seitenwand (4) nach innen ragt, wobei der erwähnte Flüssigkeitseinlass von einem Spalt (16) auf der in Drehrichtung gesehen hinteren Seite der Buchse dargestellt wird, und wobei die Mittelebene des Spalts innerhalb eines Winkelbereichs von ± 90° um die der Drehrichtung gelegene Richtung gelegen ist.

3. Zerstäuberrad nach Anspruch 2, dadurch gekennzeichnet, dass der Boden des Spalts (16) im wesentlichen mit der Innenseite der Seitenwand fluchtet.

## Revendications

1. Roue de pulvérisation pour pulvériser des liquides, comprenant un moyeu (1) de fixation de la roue sur un arbre de commande à sens de rotation imposé, un fond de roue (3) relié audit moyeu et une paroi latérale cylindrique (4) reliée audit fond de roue et formant, avec le fond de roue et le moyeu, une chambre, en forme de bol, d'alimentation en liquide, un couvercle de roue (6) fixé à la paroi latérale et comportant une ouverture (9) de communication avec une entrée de liquide à pulvériser, ladite paroi latérale (4) comportant au moins une rangée d'orifices d'éjection de liquide pulvérisé, caractérisée en ce que la face interne de la paroi latérale (4) de la roue présente, le long du bord avant de chaque orifice d'éjection par rapport au sens de rotation, un bossage destiné à guider une nappe de liquide s'écoulant vers l'arrière par rapport à la paroi latérale, autour dudit bord avant et le long de la paroi latérale (4) entre l'orifice d'éjection et ledit fond de roue (3) ou couvercle de roue (6) jusqu'à un canal d'entrée à l'orifice d'éjection, orienté de façon autre que vers l'avant par rapport au sens de rotation.

2. Roue de pulvérisation selon la revendication 1, caractérisée en ce que le bossage autour du bord avant de chaque orifice d'éjection est constitué par un manchon (11) qui est inséré dans l'orifice et qui s'étend intérieurement depuis la face interne de la paroi latérale (4), ledit canal d'entrée étant formé par une fente (16) dans la paroi arrière du manchon par rapport au sens de rotation, le plan médian de ladite fente étant situé dans une gamme angulaire de ± 90° par rapport à la direction opposée au sens de rotation.

3. Roue de pulvérisation selon la revendication 2, caractérisée en ce que le fond de la fente (16) coïncide essentiellement avec la face interne de la paroi latérale.

FIG. 2

FIG. 3

0014056